(19) Europäisches Patentamt
European Patent Office
Office européen des brevets

(11) Publication number: 0 032 050
B1

(12) # EUROPEAN PATENT SPECIFICATION

(45) Date of publication of patent specification: 26.09.84

(51) Int. Cl.$^3$: C 08 L 83/04

(21) Application number: 80304723.2

(22) Date of filing: 29.12.80

(54) **Polysiloxane Elastomer composition and dispensable precursor therefor.**

(30) Priority: 04.01.80 US 109439
04.01.80 US 109440
04.01.80 US 109445
04.01.80 US 109446

(43) Date of publication of application:
15.07.81 Bulletin 81/28

(45) Publication of the grant of the patent:
26.09.84 Bulletin 84/39

(84) Designated Contracting States:
DE FR GB

(56) References cited:
CH-A- 433 734
DE-A-1 162 560
GB-A- 818 301
GB-A- 936 741
GB-A-1 179 127
US-A-2 891 033

PATENT ABSTRACTS OF JAPAN, vol. 4, no. 7(C-70), 10th January 1980, page 119C70

(73) Proprietor: FORD MOTOR COMPANY LIMITED
Eagle Way
Brentwood Essex CM13 3BW (GB)
(84) GB

(73) Proprietor: FORD-WERKE AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: Theodore, Ares Nicholas
34974 Valley Fordge Drive
Farmington Hills Michigan 48018 (US)
Inventor: Qaderi, Saiyed Burhan Ahmad
14179 Cranston Avenue
Livonia Michigan 48154 (US)
Inventor: Pett, Robert Allan
31063 Franklin Road
Franklin Michigan 48025 (US)
Inventor: Lemieux, Marvin Adam
19229 Nadol Drive
Southfield Michigan 48075 (US)

EP 0 032 050 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(74) Representative: **Drakeford, Robert William et al**
**Ford Motor Company Limited 15/448, Research**
**& Engineering Centre Laindon**
**Basildon Essex SS15 6EE (GB)**

**Description**

This invention relates to elastomer compositions and dispensable precursors therefor.

Elastomers for use in rotary regenerator assemblies are known, e.g., see U.S. Patent 4,148,354. These assemblies comprise ceramic core surrounded by steel ring gear with elastomer therebetween. The elastomer accommodates differential rates of expansion during assembly and during operation.

Materials proposed in U.S. Patent 4,148,354, while satisfactory, do have certain deficiencies. For example, the materials may not function optimally under certain conditions for as long periods as might be desired.

A particularly acute problem is that these materials tend to degrade during extended high temperature service. Others have proposed certain filled organosiloxane and other organic polymers for use in making articles that resist degradation when exposed to extreme conditions. See, for example, U.S. Patents 3,098,836; 3,255,125; 3,274,145; 3,506,607; 3,676,420; 3,746,662; 3,791,998; 3,865,784; 3,867,315; 3,911,045; 4,025,485; and 4,069,083.

Swiss Patent Specification CH—A—433731 discloses a curable polysiloxane composition which is suitable for manufacturing elastomeric webs and sheets which is based on a mixture of a crosslinkable diorganopolysiloxane, a silyl-hydride functional polysiloxane and a filler. The filler may be a reinforcing material such as carbon black or fumed silica, or a material such as alumina which has little or no reinforcing function. The composition also includes a structure-regulating additive and a hardener based on a metal of the platinum group.

According to the present invention there is provided a dispensable precursor composition comprising a crosslinkable organopolysiloxane, a silyl hydride functional polysiloxane and a filler, characterised in that

I. the crosslinkable polysiloxane comprises 100 parts by weight of a compound of the formula:

$$Ra\text{—}(\underset{\underset{R_b}{|}}{\overset{\overset{R_h}{|}}{Si}}O)_m\text{—}Si(Ra)_3 \qquad (I)$$

wherein at least some of the Ra's and Rb's are selected from (A) alkyl and aryl groups having from 1 to 10 carbon atoms and (B) allyl or vinyl groups, but wherein up to 25% of the Rb's may be

$$Rc\text{—}(\underset{|}{\overset{R_d}{Si}}O)_n\text{—}Si(Rc)_3 \qquad (II)$$

wherein at least some of the Rc's and Rd's are selected from (A) and (B) above but up to 10% of the Rd's may contain additional siloxane units with substituents selected from (A) and (B) or still additional siloxane units; and still further wherein (1) the average number of siloxane units per polymer molecule is from 100 to 300 and (2) there is an average total of from 1.5 to 6 crosslinking sites selected from the vinyl, allyl or vinyl and allyl groups per polymer molecule;

II. the filler comprises 60—500 parts by weight of finely divided particulate comprising:

(A) silica particulate at a weight ratio to the polysiloxane of I of from 0.3 to 2.5:1 wherein the silica particulate comprises:

1. ground silica having an average particle diameter between about 0.1 and 15 $\mu$m; and
2. fumed silica having an average particle diameter of from 0.005 to 0.015 $\mu$m; and

(B) a thermally conductive powder at a weight ratio to the polysiloxane of I. of from 0.3:1 to 2.5:1;

III. the composition further comprises a viscosity modifier comprising a silicone oil having a viscosity of from $1\times10^{-3}$ to 1 $m^2$/sec ($10^3$ to $10^6$ centistokes) at 25°C in a weight ratio to the particulate of II of from 1:20 to 1:4 oil to particulate; and

IV. the silyl hydride functional polysiloxane is present in a weight ratio with respect to the polysiloxane of the formula (I) of from 1:3 to 1:20, and has an average of up to 20 silyl hydride groups per polymer chain.

Besides enhancing certain physical properties as well as potentially reducing material costs, the particulates used in this invention also offer improved thermal stability. Improved thermal stability is insufficient by itself, however, to provide a more acceptable material for applications as ring gear assemblies. Rather, such improved thermal stability, when provided by increased particulate loading, is accompanied typically by higher initial viscosities and shorter working times. The higher initial viscosities and shorter working times can make such materials undesirable for high volume production use.

The highly filled, thermally conductive elastomers made from the precursors of the invention readily fill difficult-to-fill mold cavities and yet, when cured, exhibit such physical and thermal properties as to make them admirably suited for high temperature mechanical service.

In elastomer precursor compositions of this invention, crosslinking occurs between such functional groups as vinyl of one organopolysiloxane and such functional groups as silyl hydride (=SH) of another organopolysiloxane in the presence of catalyst and certain other ingredients. Among these other ingredients are thermally conductive particulates that contribute to high temperature stability and improved physical properties of the elastomer.

Certain viscosity modifiers serve to facilitate incorporation of high particulate levels into the elastomer precursors while at the same time permitting desired initial viscosities and working times. By selection and control of particulate size and amount as well as viscosity modifier type and amount, there is a net increase in thermal and physical properties. At the same time there is provision thereby of elastomer precursors with such initial viscosities and working times as to permit ready incorporation into difficult to fill mold cavities.

Surprisingly, even though the viscosity modifier is liquid and may be expected to be non-reactive, the amount of metallic particulate, for example, that it allows to be effectively incorporated gives elastomers which show even less high temperature weight loss than the same elastomers without any metallic particulate and viscosity modifier. Thus, the metal and liquid viscosity modifier combination in the elastomer acts, with respect to thermal aging, as if it were a more stable filled, crosslinked polymer than the filled, crosslinked organopolysiloxane polymer without such combination. With spherical or irregular shaped particles (e.g. $L/D \leq 8$) as the powders of this invention, the above described benefit is particularly notable.

The elastomers of this invention are made by intimately admixing two polymer components (Component I and Component II). which crosslink at room temperature (or elevated temperature, if desired) to provide (with the other ingredients in the components) thermally conductive elastomers. The ingredients of Components I and II preferably are as follows:

A. Component I. Component I comprises 100 parts by weight of a crosslinkable polymer (Polymer I). Polymer I is of a formula corresponding to

$$Ra—(\overset{R_b}{\underset{R_b}{|}}\!\!\!\!\!\!\!\!SiO)_m—Si(Ra)_3 \qquad I$$

wherein at least some of the Ra's and Rb's are independently selected from (A) any one or more of 1, saturated hydrocarbyl groups having 1—10 carbon atoms or 2. saturated hydrocarbyloxy groups having from 1 to 10 carbon atoms that are alkyl or aryl or alkyl and aryl carbons and (B) either or both allyl or vinyl which may be substituted by halo or saturated hydrocarbyl or hydrocarbyloxy groups between about 1—8 carbon atoms that are alkyl or aryl or aryl and alkyl carbon atoms and wherein there are up to two substituents of these substituents per vinyl or allyl. Up to about 25% (preferably up to 10%), however, of the total number of Rb's may correspond to the formula:

$$Rc—(\overset{R_d}{\underset{|}{|}}\!\!\!\!\!\!\!\!SiO)_n—Si(Rc)_3$$

wherein at least most of the Rc's and Rd's are selected from (A) and (B) above but up to 10% (preferably 5%) of the total number of Rd's may contain additional siloxane units such as those of formula II above with substituents selected from (A) and (B) above or still additional siloxane units. Provided, however, there is (1) an average number of siloxane units (i.e. m plus all n's plus the total number of end groups) per polymer molecule between 100 and 300 (preferably 150—250) and (2) an average of above about 1.5 but lower than 6 (preferably 1.5—2.5) crosslinking sites selected from the vinyl, allyl or vinyl and allyl groups per polymer molecule. Preferably, m averages 170—220 and n is below 50. More preferably n is below 25 and less than 10% of the Rb's are siloxane units. Also, preferably the vinyl or allyl groups are on end siloxane groups e.g., the vinyl or allyl groups in the position of Ra or Rc. Examples of the saturated hydrocarbyl and the saturated hydrocarbyl of the saturated hydrocarbyloxy include: alkyl, aryl, alkaryl, aralkyl such as straight or branched alkyl, straight or branched alkyl substituted phenyl, phenyl, phenyl substituted straight or branched alkyl including for example methyl, ethyl butyl, methylphenyl, phenylethyl etc. any of which may be substituted by normally unreactive substituents such as halo (e.g. chloro) or interrupted by oxy (—O—). Examples of commercially available polymers for Polymer I are Silastic J, E & L RTV silicone elastomers available from Dow Corning Corporation.

Especially preferred polymers for Polymer I of Component I correspond mostly by weight (e.g. 90% or higher) to the formula:

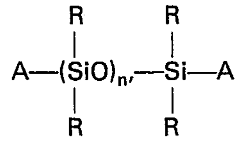

I'

wherein each R is independently a monovalent aliphatic or aromatic group or combination thereof up to 8 carbons and preferably is $R'(O)_x$ wherein x is zero or 1; and R' is independently phenyl or alkyl of up to 6 carbons (more preferably 3) or alkylphenyl (or phenylalkyl) having up to 6 alkyl carbons (more preferably up to 3 alkyl carbons; A is vinyl; and n' averages between 150 and 200.

Component I also contains silica particulate intimately admixed with the Polymer I. The silica preferably is a combination of silicas comprising ground and fumed silicas. Preferably the weight ratio of silica to Polymer I is from 0.3 to 2.5:1, more preferably from 0.9:1 to 1:0.9.

The silica is desirably of small particle size so as to not only provide reinforcement but also impart thixotropic behavior to the compositions. Preferred Polymer I and silica admixtures have viscosities between $0.5 \cdot 10^{-3}$ and $1.5 \cdot 10^{-3}$ $m^2/s$ (500—1500 centistokes) at 25°C.

As mentioned, it is preferred to have a combination of silicas comprising ground and fumed silica. Normally, the weight of ground silica such as those having an average (i.e. mean) diameter of 0.1—15 (more preferably 0.5—10) $\mu$m will desirably far exceed that weight of fumed silica e.g. a weight ratio of 2:1 or more as preferably between about 5:1 to 19:1. The fumed silica (at an average (i.e. mean) particle diameter of between 0.005 and 0.015 $\mu$m, more preferably between 0.010 $\mu$m and 0.014 $\mu$m) provides reinforcement to the elastomer. The ground oil ion imparts better flow properties to the uncured elastomer composition. The balance of these two silica types then is of importance for control of desired elastomer precursor and cured elastomer properties.

Other inorganic particles that may be added include, for example, glass fibers, if additional reinforcement (especially improved hot tear resistance) of the elastomer is desired. Chopped fiber in lengths of from 0.34 to 1.25 centimeters especially 0.5—1 centimeters are preferred. Improved adhesion of glass fiber in the cured thermally conductive elastomer can be accomplished through coating of the glass fibers with primers which are commercially available. For example, Dow Corning Primer Q 3—6061 (e.g. at 0.15 g primer to 1 kg glass fibers) diluted with methylene chloride may be used to pack and coat the glass fibers. Other fibers such as carbon, graphite, cellulose and metal may be employed together with or in place of the glass fibers.

In addition, still other ingredients such as zinc oxide, lamp black and the like may be included in component I to improve heat stability and the like functions. Preferably, component I contains a metal catalyst (such as platinum) to reduce cure time and temperature. (See, for example, U.S. Patent 4,076,684, col. 6, lines 49—68, col 7, lines 1—2, and the paragraph bridging cols 7 and 8). A preferred catalyst is a platinum complexed silicone oligomer. The oligomer may be of the structure of Polymer I but wherein m averages less than 50 e.g. 15 or less. Additionally it is preferred to use a modifier with these systems that slows increase in viscosity due to crosslinking e.g. snap time modifiers available from Dow Corning Corporation, benzotriazole, etc. Such modifiers ars commercially available and are preferably vinyl silicones of up to 15 repeating siloxane units with desirably up to 5 vinyl groups. These vinyl silicones serve to slow down the crosslinking reaction thereby slowing increase in viscosity. Other modifiers available for this purpose include quinoline, triphenyl phosphite, dimethyl sulfoxide, perchloroethylene, etc. known to those in the art. Other catalyst may also be used, e.g. peroxides, alkoxides and the like as well as modifiers as is well known in the art.

Essential to elastomers of this invention are conductive powders which improve thermal properties of the elastomer. Among the conductive powders are metal powders of silver, gold, silicon, aluminum, nickel, cadmium, palladium, molydenum, magnesium, chromium, zinc, rhodium, tungsten and the like having particle sizes (i.e. mean diameter) of 40—300 $\mu$m. Certain transition metals such as copper are less desirable for high temperature (e.g. 260°C) environments of the cured articles during long exposures (e.g. 500 hours) at such temperatures. In general, however, the conductive powders have a conductivity above that of silica and more preferably above 209 w/m°C (0.5 $cal \cdot cm \cdot (C \cdot cm^2 \cdot sec)^{-1}$) at 20°C.

It is found that even better properties are obtained with powders that are alloys, especially single phase alloys, especially in compositions having highest desired conductive powder loading. Examples of these alloys are alloys of at least about 25% by weight first row transition metals including, for example, tungsten-copper, nickel-aluminum, nickel-copper, aluminum-silicon, iron-magnesium-silicon, brasses, bronzes and the like alloys. Commercially available preferred alloys include, for example, Monel, Inconel. The average (i.e. mean) particle diameters range is preferably 40—300 $\mu$m for such alloys.

The conductive powder is normally at a weight ratio to Polymer I of from 0.3 to 2.5:1 (preferably 0.5:1 to 2.0:1) powder to polymer.

The conductive carbon powders preferably comprise graphite powders such as synthetic graphites, flake graphites and crystalline graphites or carbon blacks such as furnace blacks and acetylene blacks.

Artificial graphites useful herein include those preferably having largest particle dimensions of 5—300 μm. These graphites are commercially available from sources such as Pocco Graphite, Inc., a division of Union Oil Company, Joseph Dixon Crusible Company, etc. These artificial graphites comprise hexagonal sheets produced by graphitizing coke or similar carbons in electric furnaces at above about 3000°C. These graphites have up to about 99.9% of more graphitic carbons.

Flake graphites have a distinct flaky appearance and preferably for use herein have largest particle dimensions of 5—300 microns. Crystalline graphites suitable herein preferably contain at least 97% by weight graphitic carbon.

To obtain preferred particle size of 5—300 μm in largest particle dimension, the graphite powders may be ground in ball mills.

Smaller particle size graphites (e.g. synthetic graphite having largest particle dimension less than 15 μm exhibit (in elastomer precursor compositions of this invention) shorter working times and higher thermal conductivities in the cured elastomer as compared to larger particle size graphites in the same circumstances. On the other hand, larger size graphites (e.g., synthetic graphite having largest particle dimensions above 35 μm) exhibit respectively longer working times and lower thermal conductivities. Blends of larger and smaller graphites, however, permit optimization of these properties. Alternatively, when longer working times are desired, the elastomer precursors may be formulated to contain, for instance, less than 50 parts by weight smaller graphite particles per 100 parts of combined weight of the polysiloxane polymers, i.e., of combined weight of Polymer I and Oligomer I (which is hereinafter more particularly described). Similarly, inclusion of, for instance, more than 50 parts by weight of the larger graphite particles (e.g. particles with largest particle dimension above 35 μm) per 100 parts by weight of combined weight of Polymer I and Oligomer I, leads to longer working times.

Of the above mentioned graphites, crystalline graphite offers cured elastomers with generally highest thermal conductivity.

The carbon blacks suitable herein preferably comprise those having largest particle dimensions below one micron and in the colloidal particle size range or below. For example, furnace blacks such as N-650 (largest particle dimension averaging about 0.05 μm), SL-90 (largest particle dimension averaging about 0.1 μm) and N-339 (largest particle dimension averaging about 0.05 μm) that are available from Ashland Chemicals Co. yield desirably processable precursor compositions when compounded at about 50 parts by weight per 100 parts by weight of the polysiloxane polymers, i.e., combined weight of Polymer I and Oligomer I.

As with the graphites, smaller particle sizes provide elastomer precursor compositions with shorter working times and vice versa. Additionally, higher structure carbon blacks also shorter working times. Normally, however, desirable working times may be maintained by using less than 100 parts by weight of the black per 100 parts by weight of the combined weight of Polymer I and Oligomer I or by increasing the viscosity modifier to greater than 10% by weight of the weight of the precursor composition absent the carbon black.

The conductive carbon particulate may be used at any desired level but is normally at a weight ratio to Polymer I of from 1:10 to 2.5:1 (preferably from 0.3:1 to 2.0:1) powder to Polymer I.

Boron refractory conductive powders also improve thermal properties of the elastomer. These powders preferably are of spherical or irregular shape as distinguished from fibrous with L/D greater than 3/1. Boron nitride constitutes a preferred boron refractory powder. Another boron refractory is boron carbide. Preferred both nitride particles have an average largest dimension of 10—350 μm, more preferably 10—250 μm.

Boron nitride particularly useful in this invention comprises flat ceramic platelets similar to graphite. The powder may be obtained by a number of procedures (e.g., see "Special Ceramics, proceedings of a symposium held at the British Ceramic Research Association, Editor P. Popper, 1960). A number of commercial sources are available for boron nitride, including, for example, Carbon Products Division of Union Carbide Corporation.

The boron refractory powders may be used with other powders such as graphites at any weight ratio, preferably 1:5—5:1, especially with particles of about the same size. The boron nitride aids thermal conductivity; the graphite aids processability.

The Boron conductive powder is normally at a weight ratio to Polymer I of 0:3 to 2.5:1 (preferably from 0.5:1 to 2.0:1) powder to polymer.

Essential to the addition of high levels of conductive powders is inclusion of certain amounts of viscosity modifiers to control the initial apparent viscosity of these compositions. A careful balance between particulate including conductive powder and viscosity modifier is important to achieve high thermal conductivity without loss of viscosity modifier and consequent decrease in thermal stability and physical properties of the cured compounds. The viscosity modifier is normally at a weight ratio between about 1:20 to 1:4 (more preferably 1:10—1:2) viscosity modifier to the inorganic particulates of silica and conductive powder depending upon certain other features as amount and particle size of conductive powder and other particulates as well as viscosity modifier character.

The viscosity modifier preferably comprises a silicone oil having a viscosity of between $10^{-3}$ and 1 $m^2/s$ (1000—1,000,000 centistokes) at 25°C, more preferably $5 \cdot 10^{-3}$—1 $m^2/s$ (5000—1,000,000 centistokes) at 25°C. Preferred viscosity modifiers include those having a formula which corresponds

to formula I above for Polymer I except that the vinyl group is replaced by groups similar to the others on the backbone, e.g. alkyl or alkoxy of 1—10 carbon atoms. Especially preferred viscosity modifiers are dimethyl silicone oils i.e. polymers of formula I above wherein at least most of the $R_{a's}$ and $R_{b's}$ are methyl and particularly wherein there is minimum branching e.g. wherein less than 10% the Rb's are siloxane units. In addition to dimethyl silicone oils, however, other examples of silicone oils that may be used alone or in combination with dimethyl silicone oils include, for example, methyl phenyl silicone, branched methyl phenoxy silicone, branched chlorophenyl methyl silicone, flurosilicone, nitrile silicone, methyl hydrogen and methyl vinyl silicone oils.

Especially preferred viscosity modifiers correspond to the formula:

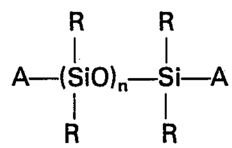

wherein R and A comprise alkyl of 1—8 carbons or phenyl or phenyl substituted by alkyl or alkoxy of 1—8 carbons or halo such as chloro; and n is above 15.

B. Component II. Component II comprises an oligomer (hereinafter, Oligomer I) that crosslinks with Polymer I through the vinyl groups of Polymer I and silyl hydride groups of Oligomer I. Oligomer I preferably has a formula corresponding to that of formula I except that there are an average of more than 1 and less than 20 silyl hydride groups (—SiH) rather than any vinyl or allyl groups; and total number of siloxy groups (i.e. total of all m and n's) averages 15—50; and there is little, if any, branching e.g. less than about 5% of the Rb's are siloxane units. Examples of such oligomers include Silastic J crosslinking polymer available from Dow Corning Corporation.

Preferred oligomer crosslinking agents correspond to the formula:

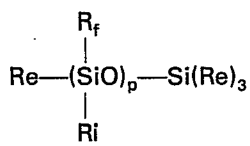

III.

wherein Re and Rf are selected from hydrogen and saturated hydrocarbyl or hydrocarbyloxy of 1—10 carbon atoms optionally substituted by halo such as chloro or interrupted by oxy (—O—); p averages between 6—40 and wherein there is an average of at least two silyl hydrides groups per polymer and up to one for each siloxy group, more preferably an average between 5 and 15 silyl hydride groups per polymer chain.

Especially preferred crosslinking agents correspond mostly by weight (e.g. 90% or more) to the formula:

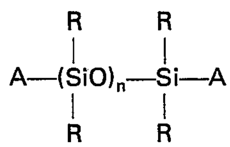

III′

wherein R is alkyl or alkoxy of 1—3 carbons; phenyl or phenoxy, preferably methyl; A is alkyl of 1—3 carbon atoms or phenyl, preferably methyl; and n is between 5—14 on the average.

The crosslinking agent is used at a weight ratio with respect to Polymer I of between 1:3 to 1:20, Polymer III to Polymer I and preferably at least 1 equivalent of silyl hydride for each equivalent of vinyl or other aliphatic unsaturation.

The elastomer precursor compositions of this invention may also contain other such ingredients which are included typically in compositions of the type disclosed herein, e.g. dyes, heat stabilizers, antioxidants, pigments, adhesion promotors, uv absorbers and the like.

The following procedures are used in the examples below to determine working time and physical and thermal properties:

Working Time: After de-aeration some of mix is poured in a 100 ml. beaker for determination of working time with the Brookfield viscometer. A #4 spindle at 0.6 rpm is used for this measurement with the guard in its proper place. The time required for the spindle to move from the starting point to 100 on the instrument scale is called the working time of a composition.

A. Physical properties

1. Tensile testing of dumbbell specimens: ASTM D 412 procedure is used for determination of tensile strength, 10% modulus and elongation to break. Dumbbell specimens are cut with the standard die from a thin slab (0.32 cm thick) and used for this testing.

2. Durometer hardness: The hardness of cured silicone rubber is determined according to ASTM D 2240 procedure.

3. Tear testing: Tear specimens, cut with a die B, are tested according to ASTM D 624 procedure. Razor-nicked specimens are used for determination of tear resistance.

B. Coefficients of thermal expansion: The coefficients of thermal expansion are determined with the Dupont 942 thermomechanical analyzer. Sensitivity of this instrument is checked with an aluminum metal standard. Sample height is 0.60 cm and temperature was programmed at 5°C/mm. In all cases the expansion probe is resting on molded surfaces and has zero load. The coefficients of expansion are calculated for the temperature ranges of 25—300°C and 200—300°C.

C. Determination of thermal conductivities: The split bar method is used for determining the thermal conductivities of these elastomeric materials. Two specimens are used for these measurements and an average of thermal conductivity is obtained from the two samples. Typical dimensions of thin specimens are 2.14 cm(W)x4.80 cm(L)x0.210 cm(T) and for thick specimen 2.15 cm(W)x4.80 cm(L)x0.65 cm(T). Measurements on two samples of different thickness are used to eliminate temperature drops due to the interfaces between the specimen and copper rod.

The Examples below are intended to illustrate this invention and not necessarily limit its scope.

Example 1

The following ingredients in amounts indicated are charged into a Hobart mixer:

| Component | Amount |
|---|---|
| 1. Silastic J RTV Silicone Elastomer and silica particulate (1) | 2,268.0 gm. |
| 2. Kadox 15 ZnO | 14.20 gm. |
| 3. Williams 1011 Lampblack | 7.10 gm. |
| 4. Glass Fibers (1/4" (6.3 mm) chopped strand coated with primer) | 25.00 gm. |

After mixing above ingredients for five minutes, this base is stored for subsequent use in the preparation of thermally conductive elastomer compositions.

In compounding the thermally conductive elastomer material, the above base compound is combined with ingredients below in the following manner:

| Component | Amount |
|---|---|
| 1. Base Material | 400.00 gms. |
| 2. Silastic J crosslinking polymer | 40.00 gms. |
| 3. Cure Modifier E—1990—76 (2) | 0.80 gms. |
| 4. Silicone Fluid 200 (0.1 $m^2$/s) (100,000 centistokes at 25°C) | 40.00 gms. |
| 5. Silicon Powder (—325 mesh) | 150.00 gms. |

The base material and silicon powder are charged in the steel bowl of Ross double planetary mixer. The addition of Silicone Fluid 200 follows with mixing for 4 minutes. The mix is scrapped off the two blades of mixer and allowed to fall in middle of bowl for better mixing. Then the silastic J crosslinking polymer and cure modifier are added and mixing is completed in 6 more minutes. After de-aeration of mix for 30 minutes, it is ready for molding and determination of working life of compound with the Brookfield viscometer. The working time is 10 hours. Molding of mix follows by pouring part of it in a four cavity mold kept at room temperature. After curing the compound for 20 minutes (top platen of hydraulic press at 232°C and bottom at ambient temperature) under 63 tons (64000 kg) pressure, the rubber slabs are taken out of mold and post cured in an air circulating oven for 3 hours at 202°C. (Alternatively, curing can also be done by leaving the charged mold at room temperature for 48 hours.)

The molded articles exhibit the following physical properties before and after aging at 260°C for 500 hours.

| Test temp. | Hardness shore A | Modulus at 90% elong. MPa | Tensile strength MPa | Tear strength KN/M | Elonga-tion % |
|---|---|---|---|---|---|
| 25°C | 63 | 0.75 | 4.30 | 14.20 | 57 |
| 232°C | 63 | 0.73 | 2.40 | 5.05 | 31 |
| 232°C* | 66 | 0.89 | 2.10 | 4.80 | 22 |

*Aged at 260°C for 500 hours.

Retention of physical properties on aging is excellent with practically no change in hardness. The weight loss on aging is small 3.3 vs. 6.0% compared to materials without the conductive filler. The thermal conductivity is 0.36 w/m°C ($8.55 \times 10^{-4}$ cal. sec.$^{-1}$ cm.$^{-1}$ °C$^{-1}$), coefficient of linear thermal expansion is 2.7 $10^{-4}$/°K and weight loss on aging at 260°C for 500 hours is 3.3%. The addition of the conductive filler to the elastomer compositions shows no negative effects and doubles the conductivity of base material.

(1) The silica particulate of the base material is about 1093 parts by weight ground crystalline silica (Min-U-Sil) and about 58 parts by weight fumed silica (Cab-O-Sil MS-75). Min-U-Sil is a white powder with particles having an average diameter of about 5 μm and a specific gravity of about 2.65 Cab-O-Sil MS-75 has with a specific gravity of 2.2 and an average particle diameter between about 0.07—0.1 μm. The base material or base compound further includes less than about 10 parts by weight of a platinum complex catalyst which is a vinyl siloxane oligomer modified by platinum metal (available from Dow Corning Corporation). The base compound with these ingredients has a viscosity between $0.7 \times 10^{-3}$ and $1.3 \cdot 10^{-3}$ $m^2/s$ (700—1300 centistokes) at 25°C.

(2) A low molecular weight methyl vinyl silicone.

Example 2

Example 1 is repeated except the weight of silicon powder is 180.0 gms. After mixing all ingredients on a 80x180 mm two-roll vented research mill, the compound has a working time of 7.5 hours.

Specimen molded under the same conditions as materials of Example 1 exhibit good physical properties before and after aging at 260°C for 500 hours. They also exhibit improved thermal conductivity and lower weight loss as compared to compounds without the silicon.

Example 3

A base compound prepared as in Example 1 is compounded with the following ingredients:

| Component | Amount |
|---|---|
| 1. Base compound (Example 1) | 430.00 gms. |
| 2. Silicon powder (—325 mesh) | 150.00 gms. |
| 3. Silicone Fluid 705 (3) | 10.00 gms. |
| 4. Silastic J Crosslinking polymer | 43.00 gms. |
| 5. Cure Modifier E—1990—76 (Example 1) | 0.80 gms. |

In this composition the Silicone Fluid #200 is replaced by base material (30 gms.) and lower viscosity Silicone Fluid 705 (10 gms.). After mixing according to procedure of Example 1, the physical properties of virgin and aged specimens are as follows:

| Test temp. | Hardness shore A | Modulus at 10% elong. MPA | Tensile strength MPa | Tear strength KN/M | Elonga-tion % |
|---|---|---|---|---|---|
| 25°C | 70 | 1.25 | 5.40 | 17.50 | 53 |
| 232°C | 69 | 1.17 | 2.85 | 7.20 | 25 |
| 232°C* | 76 | 1.43 | 2.10 | 6.70 | 16 |

*Data for aged samples at 260°C for 500 hours.

In addition to good retention of physical properties on aging, these articles exhibit improved thermal conductivities and lower weight losses on heat aging at 260°C for 500 hours.

(3) Pentaphenyl-trimethyl siloxane.

Example 4

A base compound prepared as in Example 1 is combined with the following ingredients according to mixing procedure of Example 1.

| Component | Amount |
|---|---|
| 1. Base compound (Example 1) | 656.00 gms. |
| 2. Aluminum Powder (—325 Mesh) | 213.00 gms. |
| 3. Silicone Fluid 200 (0.1 $m^2/s$ or 100,000 centistokes at 25°C) | 65.60 gms. |
| 4. Silastic J Crosslinking polymer | 65.60 gms. |
| 5. Cure Modifier E—1990—76 (Example 1) | 1.30 gms. |

The working time of this compound is 10.5 hours.

After molding this silicone elastomer composite according to the conditions described in Example 1, virgin and aged specimens* at 260°C for 500 hours have the following physical properties:

| Test temp. | Hardness shore A | Modulus at 10% elong. MPa | Tensile strength MPa | Tear strength KN/M | Elongation % |
|---|---|---|---|---|---|
| 25°C | 60 | 0.69 | 3.15 | 11.4 | 43 |
| 232°C | 59 | 0.66 | 1.54 | 5.0 | 25 |
| 232°C | 64 | 0.75 | 1.91 | 3.5 | 10 |

These materials exhibit also improved thermal conductivity (0.30 W/m°C) (7.10 $10^{-4}$ cal. $sec.^{-1}$ $cm.^{-1}$ $°C^{-1}$) and lower weight loss on aging at 260°C for 500 hours.

Example 5

A base compound prepared as in Example 1 is mixed with the following ingredients:

| Component | Amount |
|---|---|
| 1. Base compound (Example 1) | 656.00 gms. |
| 2. Aluminum powder (—325 Mesh) | 350.00 gms. |
| 3. Silicone Fluid 200 (0.1 $m^2/s$ or centistokes at 25°C) | 65.60 gms. |
| 4. Silastic J Crosslinking polymer | 65.60 gms. |
| 5. Cure Modifier E—1990—76 (Example 1) | 1.30 gms. |

After completion of mixing as in Example 1, the compound has a working time of 6.0 hours. After de-airation molded articles of various thicknesses are prepared by molding at 177°C for 20 minutes and post curing at 202°C for 3 hours in an air-circulated oven.

The test specimens exhibit the following physical properties before and after aging* at 260°C for 500 hours.

| Test temp. | Hardness shore A | Modulus at 10% elong. MPa | Tensile strength MPa | Tear strength KN/M | Elongation % |
|---|---|---|---|---|---|
| 25°C | 63 | 0.92 | 4.20 | 13.60 | 45 |
| 232°C | 63 | 0.88 | 1.75 | 6.20 | 24 |
| 232°C* | 68 | 1.05 | 1.90 | 5.15 | 13 |

*Upon aging these materials exhibit good retention of physical properties. Thermal conductivity is improved and percent weight loss is lower than in compounds without the aluminum powder.

Example 6

A base compound prepared as in Example 1 is mixed with the same ingredients as in Example 5 but with the exception of weight of aluminum powder. Aluminum powder (450.00 gms., —325 Mesh) is combined with ingredients listed in Example 5. After mixing, the elastomer composition has a working time of 3 hours.

Molded articles cured according to procedure of example 5 exhibit good physical properties. Retention of physical properties after aging is good. Improvement in thermal conductivity (0.45 W/m.°C (10.8 $10^{-4}$ cal. sec.$^{-1}$ cm.$^{-1}$ °C)) and percent weight loss (3.7%) is also found.

Example 7

A base compound prepared as in Example 1 is mixed on a 80x180 mm. two-roll vented research mill with the following ingredients:

| Component | Amount |
|---|---|
| 1. Base compound (Example 1) | 480.00 gms. |
| 2. Iron Powder (—230 Mesh) | 480.00 gms. |
| 3. Silicone Fluid 200 (0.1 $m^2$/s or 100,000 centistokes at 25°C) | 48.00 gms. |
| 4. Silastic J. Crosslinking polymer | 48.00 gms. |
| 5. Cure Modifier E—1990—76 (Example 1) | 0.96 gms. |

After 20 minutes of mixing at ambient temperature, the mix had a working time of 6.20 hours. Upon completion of de-airation, the mixture is molded according to conditions of Example 1. The physical properties before and after aging* at 260°C for 500 hours are listed below.

| Test temp. | Hardness shore A | Modulus at 10% elong. MPa | Tensile strength MPa | Tear strength KN/M | tion % |
|---|---|---|---|---|---|
| 25°C | 65 | 0.97 | 3.70 | 12.90 | 38 |
| 232°C | 65 | 0.74 | 1.59 | 5.00 | 20 |
| 232°C* | 77 | 0.86 | 1.60 | 4.60 | 17 |

*Improvements in thermal conductivity (0.33 w/m.°C 7.85 $10^{-4}$ cal. sec.$^{-1}$ cm.$^{-1}$ °C$^{-1}$)) and percent weight loss upon aging are observed.

Example 8

Example 7 is repeated with the exception that lower amounts of iron powder (380 gms.) is used for making the elastomer compound. After mixing, the material exhibits a working time of 8 hours.

Molded specimens of various thicknesses exhibit improved thermal conductivity and percent weight losses upon aging at 260°C for 500 hours.

Example 9

Example 7 is repeated with the exception that a higher amount of iron powder (580 gms.) is used for preparing the elastomer compound. Working time of mixture is 4.5 hours. Molded specimens according to conditions of Example 7 exhibited improvement in thermal conductivity and no improvements in weight loss.

Example 10

A base compound prepared as in Example 1 is mixed with the same ingredients as in Example 1 with the exception of silicon powder. Chromium powder is used as follows:

| Component | Amount |
| --- | --- |
| 1. Base Compound | 400.00 gms. |
| 2. Chromium Powder (—325 Mesh) | 300.00 gms. |
| 3. Silicon Fluid 200 (0.1 $m^2/s$ or 100,000 centistokes at 25°C) | 40.00 gms. |
| 4. Silastic J Crosslinking polymer | 40.00 gms. |
| 5. Cure Modifier E—1990—76 (Example 1) | 0.80 gms. |

The ingredients are mixed as in Example 1. Upon completion of mixing, this compound has a working time of 7.0 hours.

Moldings are made according to conditions described in Example 1. The physical properties before and after aging at 260°C for 500 hours are as follows:

| Test temp. | Hardness shore A | Modulus at 10% elong. MPa | Tensile strength MPa | Tear strength KN/M | Elongation % |
| --- | --- | --- | --- | --- | --- |
| 25°C | 63 | 0.65 | 3.00 | 12.8 | 40 |
| 232°C | 63 | 0.68 | 1.30 | 5.10 | 20 |
| 232°C* | 77 | 0.00 | 1.02 | 4.90 | 18 |

Improvement in thermal conductivity is observed (0.34 w/m.°C (8.1 $10^{-4}$ cal. $sec.^{-1}$ $cm.^{-1}$ °C)) but no substantial improvement in weight losses upon aging.

Example 11

The procedures of Example 10 are repeated with the exception that 200 gms. of chromium powder is used (—325 Mesh). Upon mixing the mixture has a working time of 8.5 hours. Molded articles show improvements in thermal conductivities over compounds containing no chromium powder.

Example 12

The procedures of example 10 are repeated with the exception that 400 gms. of chromium powder are mixed with other ingredients. After molding the mixture under same conditions as in Example 10, the articles exhibit improvements in thermal conductivity.

Example 13

Example 1 is repeated with the exception that 55.0 gms. of the Silicone Fluid 200 is used for preparing the mixture. The molded articles here improved thermal conductivity.

Example 14

Example 1 is repeated with the exception that 30 gms. of the Silicone Fluid 200 are used in preparation of compound. After molding specimens according to procedure of Example 1, they exhibit good properties before and after aging at 260°C for 500 hours. Improvement in thermal conductivity and percent weight losses are found.

Example 15

Example 6 is repeated with the exception of weight of the Silicone Fluid 200 (70.00 gms.). The mixture is processable and upon molding has improved properties.

Example 16

Example 1 is repeated with the exception of Silicone Fluid 200. An equal amount of a lower viscosity fluid ($6.10^{-2}$ $m^2/s$ (60,000 centistokes), 40.00 gms.) is employed. Upon mixing and molding, the compounds have good properties.

Example 17

Example 5 is repeated with exception that 40.00 gms. of a lower viscosity Silicone Fluid ($0.03 \cdot 10^{-2}$ $m^2/s$ (30,000 centistokes) at 25°C) is used. Similar results are seen.

Example 18

Examples 1, 2, 4 or 5 are repeated, except for varying the amount of cure modifier E—1990—76 (0.6 to 1.5 gms.). Similar results are seen.

Example 19

Examples 1, 2, 4 and 5 are repeated except Silastic E RTV Silicone Elastomer is used on an equal weight basis to replace the Silastic J RTV Silicone Elastomer in making the base compound. Similar results are seen.

Example 20

Examples 1, 2, 4 and 5 are repeated, except Silastic L RTV Silicone Elastomer on an equal weight basis to replace the Silastic J RTV Silicone Elastomer is used in making the base compound. Similar results are seen.

Metal alloy compositions

Example 21

The base compound described in Example 1 is combined with the following ingredients according to mixing procedure of Example 1.

| Component | Amount |
|---|---|
| 1. Base Material (Example 1) | 400.00 gms. |
| 2. Nickel-Aluminum Alloy (80/20 by weight) | 400.00 gms. |
| 3. Silicone Fluid 200 (0.1 $m^2/s$ or 100,000 centistokes at 25°C) | 40.00 gms. |
| 4. Crosslinking polymer (Silastic J) | 40.00 gms. |
| 5. Cure Modifier E—1990—76 (Example 1) | 0.80 gms. |

After mixing above ingredients, the compound has a working time of 8 hours.

After molding this silicone elastomer composite according to conditions described in Example 1, the virgin and aged specimens* at 260°C for 500 hours have the following physical properties:

| Test temp. | Hardness shore A | Modulus at 10% elong. MPa | Tensile strength MPa | Tear strength KN/M | Elongation % |
|---|---|---|---|---|---|
| 25°C | 60 | 0.62 | 3.23 | 13.30 | 47 |
| 232°C | 62 | 0.68 | 1.35 | 5.07 | 20.0 |
| 232°C | 62 | 0.84 | 1.08 | 4.65 | 13.0 |

These materials exhibit higher thermal conductivity values than compositions with other metal alloy powders (0.49 w/m.°C ($11.70 \cdot 10^{-4}$ cal. $sec.^{-1}$ . $cm.^{-1}$ . $°C^{-1}$)). Lower weight losses are also found after aging at 260°C for 500 hours. Aging at 260°C for 500 hours has no effect on hardness.

Example 22

A base compound prepared as in Example 2 is mixed with the following ingredients according to procedure of Example 1.

| Component | Amount |
|---|---|
| 1. Base Compound (Example 1) | 600.00 gms. |
| 2. Tungsten-Copper (75/25 by weight) Alloy Powder | 600.00 gms. |
| 3. Silicone Fluid 200 (0.1 $m^2/s$ or 100,000 centistokes at 25°C) | 60.00 gms. |
| 4. Silastic J Crosslinking polymer | 60.00 gms. |
| 5. Cure Modifier E—1990—76 (Example 1) | 1.20 gms. |

The mixture has a longer working time (15 hours). The alloy powder appears to have an effect on working time.

After molding this silicone compound according to conditions described in Example 1, the virgin and aged* specimens at 260°C for 500 hours have the following physical properties:

| Test temp. | Hardness shore A | Modulus at 10% elong. MPa | Tensile strength MPa | Tear strength KN/M | Elongation % |
|---|---|---|---|---|---|
| 25°C | 60 | 0.90 | 3.21 | 13.90 | 43 |
| 232°C | 61 | 0.67 | 1.22 | 5.34 | 19 |
| 232°C | 66 | 0.89 | 1.40 | 4.85 | 17 |

These molded materials exhibit also improved thermal conductivity (0.25 w/m.°C ($5.98 \times 10^{-4}$ cal. $sec.^{-1} \cdot cm.^{-1} \cdot °C^{-1}$)) and lower weight loss (aging at 260°C for 500 hours) than materials without the metal alloy powder. Hardness (Shore A) change with aging is very insignificant.

Example 23

To a base compound prepared as in Example 1, the following ingredients are added according to procedure of Example 1.

| Component | Amount |
|---|---|
| 1. Base Compound (Example 1) | 400.00 gms. |
| 2. Nickel-Copper (70/30 by weight) Alloy Powder | 400.00 gms. |
| 3. Silicone Fluid 200 (0.1 $m^2/s$ or 100,000 centistokes at 25°C) | 40.00 gms. |
| 4. Silastic J Crosslinking polymer | 40.00 gms. |
| 5. Cure Modifier E—1990—76 (Example 1) | 0.80 gms. |

After mixing and de-aeration the mixture has a working time of 8.5 hours.

Following molding of this silicone elastomer composite, the physical, chemical and thermal properties are determined.

| Test temp. | Hardness shore A | Modulus at 10% elong. MPa | Tensile strength MPa | Tear strength KN/M | Elongation % |
|---|---|---|---|---|---|
| 25°C | 60 | 0.67 | 3.75 | 12.00 | 55 |
| 232°C | 60 | 0.81 | 1.55 | 7.9 | 20 |
| 232°C | 62 | 0.64 | 1.35 | 3.2 | 21 |

Molded samples exhibit improved thermal conductivity (0.43 w/m.°C ($10.2 \cdot 10^{-4}$ cal. $sec.^{-1}$ $cm.^{-1} \cdot °C^{-1}$)) and lower weight loss on aging at 260°C for 500 hours. No change in hardness with aging is observed.

Example 24

Example 23 is repeated with the exception that the nickel-copper alloy is replaced by an equivalent amount of aluminum-silicon (89/11 by weight). After mixing, the elastomer composite has a working time of 4 hours.

Molded articles according to procedure of Example 1 possess good physical properties. They also exhibit improved thermal conductivity and lower weight loss on aging at 260°C for 500 hours.

Example 25

Example 23 is repeated with the exception that the nickel-copper alloy powder is replaced by 373 g. of Iron-Silicon-Magnesium (80/10/10 by weight) alloy powder. After mixing the compound has a working time of 1 hour.

Molded specimens cured according to conditions of Example 1 have the following physical properties:

| Test temp. | Hardness shore A | Modulus at 10% elong. MPa | Tensile strength MPa | Tear strength KN/M | Elonga-tion % |
|---|---|---|---|---|---|
| 25°C | 69 | 1.09 | 4.80 | 10.80 | 52 |
| 232°C | 72 | 0.75 | 2.75 | 4.72 | 32 |
| 232°C | 82 | 1.10 | 2.70 | 4.90 | 12 |

Improvements in thermal conductivity (0.33 w/m.°C ($7.98 \cdot 10^{-4}$ cal. $sec.^{-1}$ . $cm.^{-1}$ $°C^{-1}$)) and percent weight loss are found. A small change in hardness (Shore A) is observed on aging of material at 260°C for 500 hours.

Example 26

A base compound prepared as in Example 1 is combined with the following ingredients:

| Component | Amount |
|---|---|
| 1. Base Compound | 400.00 gms. |
| 2. Inconel Powder (—325 Mesh, Nickel-Chromium Iron alloy) | 380.00 gms. |
| 3. Silicone Fluid 200 (0.1 $m^2/s$ or 100,000 CSK at 2506) | 40.00 gms. |
| 4. Silastic J Crosslinking polymer | 40.00 gms. |
| 5. Cure modifier E—1990—76 (Example 1) | 0.80 gms. |

Following mixing and de-aeration the mixture exhibits a working time of 6.5 hours.

The physical, chemical and thermal properties of molded articles cured as in Example 1 are determined as described in this document. Physical properties are as follows:

| Test temp. | Hardness shore A | Modulus at 10% elong. MPa | Tensile strength MPa | Tear strength KN/M | Elonga-tion % |
|---|---|---|---|---|---|
| 25°C | 67 | 1.35 | 3.00 | 18.40 | 31 |
| 232°C | 67 | 1.63 | 1.80 | 11.70 | 12 |
| 232°C | 75 | 1.45 | 1.58 | 3.80 | 10 |

Improvements in thermal conductivity and percent weight loss are observed. After aging, very small change in hardness is found.

Example 27

To a base compound prepared as in Example 1 the following ingredients are added as in Example 1.

| Component | Amount |
|---|---|
| 1. Base Compound (Example 1) | 400.00 gms. |
| 2. Brass powder (#2B—126) (Cu 52%, SN 48% by weight) | 300.00 gms. |
| 3. Silicone Fluid 200 (0.1 $m^2/s$ or 100,000 CSK at 25°C) | 40.00 gms. |
| 4. Silastic J Crosslinking polymer | 40.00 gms. |
| 5. Cure Modifier E—1990—76 (Example 1) | 0.80 gms. |

After mixing and de-aeration the mixture has a very long working time (20 hours). After molding compound as in Example 1, the molded articles have the following physical properties:

| Test temp. | Hardness shore A | Modulus at 10% elong. MPa | Tensile strength MPa | Tear strength KN/M | Elonga-tion % |
|---|---|---|---|---|---|
| 25°C | 39 | 0.37 | 1.70 | 6.10 | 62 |
| 232°C | 38 | 0.22 | 0.67 | 2.13 | 28 |
| 232°C* | 37 | 0.31 | 0.58 | 2.20 | 18 |

Improved thermal conductivity and percent weight loss are found. The brass powder appears to affect the reaction and results in softer elastomer articles.

Example 28

Example 23 is repeated with the exception that the brass powder (#2 B-226) is replaced by an equivalent weight of Bronze Powder (B-402, −100 mesh 50—50 Cu/Zn). After mixing the silicone elastomer composite has a working time of 3.5 hours.

After molding the mixture according to procedure of Example 1, the molded articles have good physical properties before and after aging. They also exhibit improved thermal conductivity.

Example 29

In preparing the base for use in compounding thermally conductive silicone elastomers the following ingredients are charged into a Hobart double planetary mixer:

| Component | Amount |
|---|---|
| 1. Silastic J RTV Silicone Elastomer+$SiO_2$ (1) | 1134.0 grams |
| 2. Kadox 15 ZnO | 7.10 grams |
| 3. Williams 1011 Lampblack | 3.55 grams |
| 4. Glass Fibers ($\frac{1}{4}$" (6.3 mm) Chopped Strand Coated with Primer) | 12.50 grams |
| 5. Cure Modifier E—1990—76 (Example 1) | 2.10 grams |

After mixing above ingredients for five minutes the base can be stored for subsequent use in preparing the thermally conductive materials.

In making the thermally conductive material the base is combined with the following ingredients:

| Component | Amount |
|---|---|
| 1. Base Material | 400.00 grams |
| 2. Synthetic Graphite (Particle Diameter 15 $\mu$m) | 100.00 grams |
| 3. Silicone Fluid (0.1 $m^2$/s or 100,000 Centistokes at 25°C) | 40.00 grams |
| 4. Silastic J Crosslinking polymer | 40.00 grams |

After charging the base in a Ross double planetary mixer, the addition of synthetic graphite (15 $\mu$m) follows with mixing for 2 minutes. Then the addition of silicone fluid follows with mixing for 4 minutes. The mix is scrapped off the two blades of mixer and allowed to fall in the middle of steel bowl for improving mixing. Addition of silastic J curing agent is completed in six minutes with mixing. After de-aeration of the mixture for 30 minutes, it is ready for molding and determination of working time with the Brookfield Viscometer (Model LV, Spinde #4). The working time of this mixture is 1 hour.

Molding of mix is carried out by pouring and spreading the mixture in a four cavity, chrome-plated mold kept at ambient temperature. After curing the compound for 20 minutes (top platen of hydraulic press at 232°C and bottom at ambient temperature) under 70 ton (71120 kg) pressure, the rubber slabs are taken out of mold and post cured in an air circulating oven for 3 hours at 202°C. Alternately, the mixture can be cured at ambient temperature for 24—48 hours.

The molded articles exhibit the following physical properties before and after aging* at 260°C for 500 hours.

| Test temp. | Hardness shore A | Modulus at 10% elong. MPa | Tensile strength MPa | Tear strength KN/M | Elongation % |
|---|---|---|---|---|---|
| 25°C | 68 | 1.31 | 3.40 | 11.60 | 34 |
| 232°C | 65 | 0.92 | 2.35 | 5.30 | 28 |
| 232°C* | 70 | 0.92 | 1.60 | 4.40 | 19 |

The physical properties after aging are excellent with practically no change in hardness. The weight loss on aging is very small (3.1 vs 6.0%) compared to materials containing no graphite powder). The thermal conductivity is also substantially improved (0.46 w/m.°C (11.1 cal · sec.$^{-1}$ · cm$^{-1}$ · °C$^{-1}$)). The addition of synthetic graphite to the elastomer composition has no negative effects but improves thermal conductivity by a factor of 2.7. These materials also show smaller coefficients of thermal expansion than materials without the graphite powder. (2.1 · $10^{-4}$/°K).

(1) The silica particulate of the base material is about 1093 parts by weight ground silica (Min-U-Sil) and about 58 parts by weight fumed silica (Cab-O-Sil MS-75). Min-U-Sil is a white powder with particles having an average diameter of about 5 microns and a specific gravity of about 2.65. Cab-O-Sil MS-75 has a specific gravity of 2.2 and an average particle diameter of 0.07—0.1 μm. The base material further includes less than 10 parts by weight of a platinum complex catalyst which is a vinyl siloxane oligomer modified by platinum metal (available from Dow Corning). The base material with these ingredients has a viscosity of 7—13x$10^{-4}$ m$^2$/s (700—1300 centistokes) at 25°C.

Example 30

A base RTV silicone elastomer prepared as described in Example 29 is combined with the following ingredients:

| Component | Amount |
|---|---|
| 1. Base Material | 400.00 grams |
| 2. Synthetic Graphite (35—40 μm) | 85.00 grams |
| 3. Silicone Fluid (0.1 m$^2$/s or 100,000 Centistokes at 25°C) | 40.00 grams |
| 4. Silastic J Crosslinking polymer | 40.00 grams |

The ingredients are preblended with a spatula and then placed in the Ross double planetary mixer for complete mixing. The mixing was completed in ten minutes. After deaeration of mix for 30 minutes, it was used for molding and determination of working time with Brookfield Viscometer (Model LV, Spindle #4). The working time was in desired range (7.4 hours).

After molding this silicone elastomer composite according to conditions described in Example 29, the virgin and aged* specimens at 260°C for 500 hours have the following physical properties:

| Test temp. | Hardness shore A | Modulus at 10% elong. MPa | Tensile strength MPa | Tear strength KN/M | Elongation % |
|---|---|---|---|---|---|
| 25°C | 60 | 0.88 | 3.22 | 14.25 | 40 |
| 232°C | 61 | 0.70 | 1.50 | 5.40 | 20 |
| 232°C* | 62 | 0.75 | 1.05 | 4.30 | 16 |

The molded articles exhibited improved thermal conductivity (0.35 w/m.°C (8.3 · $10^{-4}$ cal · sec$^{-1}$ · cm$^{-1}$ · °C$^{-1}$)). Lower weight losses are found after aging at 260°C for 500 hours (2.8 vs 6.0). Aging also has absolutely no effect on hardness.

Example 31

The base silicone elastomer of Example 29 is mixed with the following ingredients according to procedure of Example 29.

| Component | Amount |
| --- | --- |
| 1. Base Material | 400.00 grams |
| 2. Synthetic Graphite (particle Size 35—40 $\mu$m) | 100.00 grams |
| 3. Silicone Fluid (0.1 $m^2$/s or 100,000 Centistokes at 25°C) | 50.00 grams |
| 4. Silastic J Crosslinking polymer | 40.00 grams |

The mixture has a working time of 8 hours. After molding the silicone compound according to conditions described in Example 29, the virgin and aged* specimens at 260°C for 500 hours have the following physical properties.

| Test temp. | Hardness shore A | Modulus at 10% elong. MPa | Tensile strength MPa | Tear strength KN/M | Elongation % |
| --- | --- | --- | --- | --- | --- |
| 25°C | 63 | 1.00 | 3.30 | 11.20 | 50 |
| 232°C | 67 | 1.10 | 2.90 | 5.93 | 36 |
| 232°C* | 67 | 0.99 | 2.00 | 3.40 | 22 |

Molded articles have a thermal conductivity of 0.44 w/m.°C ($10.50\times10^{-4}$ $cal \cdot sec^{-1} \cdot cm^{-1} \cdot °C^{-1}$). They also exhibit lower weight losses after aging at 260°C for 500 hours than the compounds without graphite. Accelerated aging also has no effect on hardness.

Example 32

The base material of Example 29 is prepared again as described but no glass fibers and modifier are added to the mixture. The mix is combined with the following ingredients on a 80×180 mm two-roll research mill.

| Component | Amount |
| --- | --- |
| 1. Base Material | 400.00 grams |
| 2. Synthetic Graphite (Particle Size 20—45 $\mu$m) | 85.00 grams |
| 3. Silicone Fluid (100,000 Centistokes at 25°C) | 40.00 grams |
| 4. Silastic J Crosslinking polymer | 40.00 grams |
| 5. Modifier E—1990—76) | 0.80 grams |

The working time of mix is within the desired range.

The physical properties of molded specimens are as follows:

| Test temp. | Hardness shore A | Modulus at 10% elong. MPa | Tensile strength MPa | Tear strength KN/M | Elongation % |
| --- | --- | --- | --- | --- | --- |
| 25°C | 60 | 0.50 | 3.90 | 9.80 | 68 |
| 232°C | 60 | 0.65 | 2.95 | 4.40 | 38 |
| 232°C* | 62 | 0.60 | 2.25 | 5.00 | 29 |

The rectangular specimens exhibit improved thermal conductivity. They also have lower weight losses on aging than samples without the conductive filler. Accelerated aging has no effect on hardness.

Example 33

The glass fibers and modifier are omitted from the base of Example 29. The base mixture is combined with the following ingredients in a Ross double planetary mixer:

| Component | Amount |
|---|---|
| 1. Base Material | 600.00 grams |
| 2. Synthetic Graphite (Particle Size 35—40 $\mu$m) | 150.00 grams |
| 3. Silicone Fluid (0.1 $m^2/s$ or 100,000 Centistokes at 25°C) | 60.00 grams |
| 4. Silastic J Crosslinking polymer | 60.00 grams |
| 5. Cure Modifier E—1990—76 (Example 1) | 1.20 grams |

After mixing ingredients according to Example 29, the working time of mixture is 7.0 hours. After curing and post curing the compounds as in Example 29, molded articles exhibit the following properties:

| Test temp. | Hardness shore A | Modulus at 10% elong. MPa | Tensile strength MPa | Tear strength KN/M | Elonga-tion % |
|---|---|---|---|---|---|
| 25°C | 62 | 0.66 | 3.80 | 9.70 | 63 |
| 232°C | 62 | 0.77 | 3.00 | 4.70 | 37 |
| 232°C* | 65 | 0.68 | 2.45 | 2.70 | 29 |

*Aged at 260°C for 500 hours.

The thermal conductivity of molded specimens is 0.45 w/m.°C ($10.75 \times 10^{-4}$ cal · $sec^{-1}$ · $cm^{-1}$ · $°C^{-1}$). They also show lower weight losses on aging than specimens without graphite filler. Accelerated aging has no effect on hardness.

Example 34

To the base of Example 29 the following ingredients are added according to mixing procedure of Example 29.

| Component | Amount |
|---|---|
| 1. Base Material | 500.00 grams |
| 2. Synthetic Graphite (Particle Size 15 $\mu$m) | 102.00 grams |
| 3. Silicone Fluid (0.1 $m^2/s$ or 100,000 Centistokes at 25°C) | 50.00 grams |
| 4. Silastic J Crosslinking polymer | 50.00 grams |

Upon completion of mixing and deaeration of mixture, it has a working time of 1.5 hours. Molded specimens exhibit the following physical properties:

| Test temp. | Hardness shore A | Modulus at 10% elong. MPa | Tensile strength MPa | Tear strength KN/M | Elonga-tion % |
|---|---|---|---|---|---|
| 25°C | 65 | 1.25 | 4.55 | 17.20 | 50 |
| 232°C | 68 | 1.10 | 2.60 | 7.00 | 25 |
| 232°C* | 68 | 0.99 | 1.30 | 4.60 | 14 |

*Aged at 260°C for 500 hours.

The molded specimens exhibit improved thermal conductivities. Upon accelerated aging the specimens exhibit lower weight losses and hardness changes than specimens without graphite filler.

Example 35

Example 29 is repeated with the exception that 85.00 grams of synthetic graphite and 60 grams of silicone fluid are used. The ingredients are mixed in a Ross double planetary mixer. The working time of mixture is 2.85 hours.

Molding of mix result in specimens with the following properties:

| Test temp. | Hardness shore A | Modulus at 10% elong. MPa | Tensile strength MPa | Tear strength KN/M | Elonga-tion % |
|---|---|---|---|---|---|
| 25°C | 61 | 1.10 | 4.30 | 14.00 | 61 |
| 232°C | 61 | 1.40 | 2.60 | 6.20 | 30 |
| 232°C* | 65 | 0.95 | 1.60 | 3.80 | 18 |

*Aged at 260°C for 500 hours.

The thermal conductivity of molded specimens is improved. Thermal stability is also improved.

Example 36

The base material of Example 29 is mixed in a Hobart mixer with the following ingredients:

| Component | Amount |
|---|---|
| 1. Base Material | 400.00 grams |
| 2. Synthetic Graphite (Particle Size 15 $\mu m$) | 85.00 grams |
| 3. Silicone Oil (0.06 $m^2/s$ or 60,000 Centistokes at 25°C) | 50.00 grams |
| 4. Silastic J Crosslinking polymer | 40.00 grams |

After completion of mixing schedule as in Example 29 and deaeration, the mixture has a working time of 5.00 hours.

The physical properties of virgin and heat aged* specimens has as follows:

| Test temp. | Hardness shore A | Modulus at 10% elong. MPa | Tensile strength MPa | Tear strength KN/M | Elonga-tion % |
|---|---|---|---|---|---|
| 25°C | 64 | 0.99 | 3.50 | 11.40 | 46 |
| 232°C | 64 | 0.94 | 2.85 | 5.90 | 34 |
| 232°C* | 68 | 0.98 | 1.30 | 4.00 | 14 |

*Heat aged at 260°C for 500 hours in an air-circulating oven. The molded specimens exhibit improvements in thermal conductivity and stability over the values obtained from samples containing no graphite.

Example 37

Example 36 is repeated with the exception that 60 grams of silicone oil ($6\times10^{-2}$ $m^2/s$ (60,000 centistokes at) 25°C) is employed. The working time of mixture was 7.20 hours.

The physical properties of molded specimens are as follows:

| Test temp. | Hardness shore A | Modulus at 10% elong. MPa | Tensile strength MPa | Tear strength KN/M | Elonga-tion % |
|---|---|---|---|---|---|
| 25°C | 63 | 0.84 | 3.71 | 10.30 | 68 |
| 232°C | 63 | 0.89 | 2.50 | 5.70 | 38 |
| 232°C* | 68 | 0.89 | 1.70 | 3.85 | 20 |

*Heat aged specimens at 260°C for 500 hours in an air circulating oven.

Improved thermal conductivity and heat stability are obtained. Some of physical properties such as tensile strength and elongation determined at 232°C are slightly improved.

Example 38

The base of Example 29 without the modifier (working time) is combined with the following ingredients in a Ross double planetary mixer:

| Component | Amount |
|---|---|
| 1. Base Material | 400.00 grams |
| 2. Synthetic Graphite (Particle Size 15 μm) | 85.00 grams |
| 3. Silicone Fluid (0.1 $m^2/s$ or 100,000 Centistokes at 25°C) | 80.00 grams |
| 4. Silastic J Crosslinking polymer | 40.00 grams |
| 5. Cure Modifier E—1990—76 (Example 1) | 0.80 grams |

After completion of mixing and deaeration, the working time of mixture is 8.5 hours.
After molding the resulting articles have the following properties:

| Test temp. | Hardness shore A | Modulus at 10% elong. MPa | Tensile strength MPa | Tear strength KN/M | Elongation % |
|---|---|---|---|---|---|
| 25°C | 57 | 0.90 | 2.60 | 8.95 | 45 |
| 232°C | 57 | 0.65 | 1.30 | 4.70 | 20 |
| 232°C* | 62 | 0.75 | 1.30 | 3.70 | 19 |

*Heat aged at 260°C for 500 hours in an air-circulating oven.

Improvement in thermal conductivity and thermal stability over the values of samples containing no graphite are obtained.

Example 39

The following ingredients are combined with the base of Example 29.

| Component | Amount |
|---|---|
| 1. Base Material | 400.00 grams |
| 2. Synthetic Graphite (Particle Size 35—40 μm) | 60.00 grams |
| 3. Synthetic Graphite (Particle Size 15 μm) | 40.00 grams |
| 4. Silastic J Crosslinking polymer | 40.00 grams |
| 5. Silicone Oil (0.1 $m^2/s$ or 100,000 Centistokes at 25°C) | 40.00 grams |

Following mixing and deaeration the mixture has a working time of 2.10 hours. Molded specimens have the following properties:

| Test temp. | Hardness shore A | Modulus at 10% elong. MPa | Tensile strength MPa | Tear strength KN/M | Elongation % |
|---|---|---|---|---|---|
| 25°C | 66 | 1.30 | 4.70 | 16.70 | 47 |
| 232°C | 66 | 1.35 | 2.70 | 6.90 | 22 |
| 232°C* | 68 | 1.05 | 1.50 | 3.90 | 14 |

*Aged at 260°C for 500 hours in an air-circulating oven. Samples have improved thermal conductivity and stability.

Example 40

The base of Example 29 without modifier (working time) is mixed with the following ingredients as in Example 29.

| Component | Amount |
|---|---|
| 1. Base Material | 400.00 grams |
| 2. Synthetic Graphite (Particle Size 35—40 $\mu$m) | 60.00 grams |
| 3. Synthetic Graphite (Particle Size 15 $\mu$m) | 30.00 grams |
| 4. Silastic J Crosslinking polymer | 40.00 grams |
| 5. Silicone Oil (0.1 $m^2/s$ or 100,000 Centistokes at 25°C) | 40.00 grams |
| 6. Cure Modifier E—1990—76 | 0.80 grams |

After blending ingredients in a Hobart mixer, the working time of mixture is 6.3 hours.

The physical properties of molded articles before and after aging* at 260°C for 500 hours are as follows:

| Test temp. | Hardness shore A | Modulus at 10% elong. MPa | Tensile strength MPa | Tear strength KN/M | Elongation % |
|---|---|---|---|---|---|
| 25°C | 66 | 1.15 | 3.40 | 12.10 | 37 |
| 232°C | 66 | 1.12 | 1.20 | 5.70 | 16 |
| 232°C* | 69 | 1.10 | 1.60 | 3.80 | 16 |

The molded specimens exhibit a thermal conductivity of 0.39 w/m.°C $9.3\times10^{-4}$ cal · $sec^{-1}$ · $cm^{-1}$ · $°C^{-1}$). A lower weight loss and hardness change is also found when compared to similar samples containing no graphite powder.

Example 41

The following ingredients are mixed with base of Example 29 according to procedure of Example 29:

| Component | Amount |
|---|---|
| 1. Base Material | 400.00 grams |
| 2. Synthetic Graphite (Particle Size less than 150 $\mu$m) | 130.00 grams |
| 3. Silastic J Crosslinking polymer | 40.00 grams |
| 4. Silicone Oil (0.1 $m^2/s$ or 100,000 Centistokes at 25°C) | 40.00 grams |

This composition has a working time within the desired range.

The molded articles have a thermal conductivity of 0.48 w/m.°C ($11.4\times10^{-4}$ cal · $sec^{-1}$ · $cm^{-1}$ · $°C^{-1}$). They also exhibit lower weight loss and hardness change than similar materials containing no graphite powder.

Example 42

Example 29 is repeated with the exception that synthetic graphite of particle size less than 45 $\mu$m is used. The working time of composition is 6.0 hours.

The physical properties before and after aging* at 260°C for 500 hours are as follows:

| Test temp. | Hardness shore A | Modulus at 10% elong. MPa | Tensile strength MPa | Tear strength KN/M | Elongation % |
|---|---|---|---|---|---|
| 25°C | 63 | 0.80 | 2.70 | 16.00 | 41 |
| 232°C | 64 | 0.82 | 2.55 | 7.10 | 29 |
| 232°C* | 64 | 0.70 | 1.15 | 3.20 | 15 |

The thermal conductivity of these samples is 0.10 w/m.°C (2.5 cal · $sec^{-1}$ · $cm^{-1}$ · $°C^{-1}$). Improvements in percent weight loss and hardness change are observed.

Example 43

Example 29 is repeated with the exception that synthetic graphite of particle size less than 75 μm is mixed with other ingredients. The working time of mixture is 15.0 hours. The physical properties before and after aging* at 260°C for 500 hours are as follows:

| Test temp. | Hardness shore A | Modulus at 10% elong. MPa | Tensile strength MPa | Tear strength KN/M | Elongation % |
|---|---|---|---|---|---|
| 25°C | 65 | 0.88 | 4.00 | 12.80 | 66 |
| 232°C | 65 | 0.90 | 3.00 | 5.80 | 37 |
| 232°C* | 68 | 0.90 | 1.65 | 3.70 | 19 |

The thermal properties and hardness change are improved over those of similar materials containing no graphite powder.

Example 44

The base of Example 29 is mixed with the following ingredients in a Ross double planetary mixer.

| Component | Amount |
|---|---|
| 1. Base Material | 400.00 grams |
| 2. Crystalline Graphite (Particle Size 35—40 μm) | 85.00 grams |
| 3. Silicone Oil (0.1 $m^2/s$ or 100,000 Centistokes at 25°C) | 40.00 grams |
| 4. Silastic J Crosslinking polymer | 40.00 grams |

The working time of mix is 9.5 hours.

The physical properties of virgin and aged* samples at 260°C for 500 hours are as follows:

| Test temp. | Hardness shore A | Modulus at 10% elong. MPa | Tensile strength MPa | Tear strength KN/M | Elongation % |
|---|---|---|---|---|---|
| 25°C | 64 | 0.97 | 3.10 | 12.30 | 43 |
| 232°C | 64 | 0.99 | 2.33 | 6.30 | 24 |
| 232°C* | 68 | 0.96 | 1.70 | 4.60 | 14 |

Molded specimens have a thermal conductivity of 0.54 w/m.°C ($12.9 \times 10^{-4}$ cal · $sec^{-1}$ · $cm^{-1}$ $°C^{-1}$). Lower weight loss on aging at 260°C for 500 hours is observed. The hardness change on aging is also very small.

Example 45

Example 29 is repeated with the exception that flake graphite is used (particle size 10 μm). The working time of mixture is very short. The physical and thermal properties of molded articles are inferior to those described in Examples 1—16.

Example 46

Repeat Example 29 with the exception that 100 grams of silicone fluid (0.1 $m^2/s$ or 100,000 centistokes at 25°C) is used. Longer working times are obtained. Molded articles exhibit improvements in thermal conductivity.

Example 47

Example 29 is repeated with the exception that 30 grams of silicone fluid ($6.10^{-2}$ $m^2/s$ or 60,000 centistokes at 25°C) are used. The molded articles exhibit improvements in thermal conductivity.

Example 48

Example 29 is repeated with the exception that 15 grams of silicone fluid ($3.10^{-2}$ $m^2/s$ or 30,000 centistokes at 25°C) used. A moldable composition is prepared showing improvement in thermal conductivity.

Example 49

Examples 29—48 are repeated with the exception that 0.6 grams of modifier (working time) are used. Molded specimens exhibit improvements in thermal conductivity.

Example 50

Examples 29—48 are repeated with the exception that 1.5 grams of modifier are used. Moldable compositions are prepared.

Example 51

Example 29 was repeated with the exception that synthetic graphite is replaced by 75 grams carbon black (N-650, particle size 0.05 $\mu$m). The composition has a 4.0 hour working time. Molded articles show improvements in thermal conductivity over materials containing no conductive filler.

Example 52

The amount of carbon black (N-650) in Example 51 is increased to 100.00 grams. The mixture has a shorter working time. Molded specimens have the following physical properties before and after aging* at 260°C for 500 hours:

| Test temp. | Hardness shore A | Modulus at 10% elong. MPa | Tensile strength MPa | Tear strength KN/M | Elonga-tion % |
|---|---|---|---|---|---|
| 25°C | 72 | 1.22 | 3.22 | 13.80 | 32 |
| 232°C | 72 | 0.96 | 1.50 | 5.64 | 17 |
| 232°C* | 81 | 1.72 | 1.76 | 4.20 | 10 |

Improvements in thermal conductivity are found.

Example 53

Example 51 is repeated with the exception that 75.00 grams of SL-90 carbon black is used. The mixture has a working time of 7.0 hours. Molded articles exhibit the following physical properties:

| Test temp. | Hardness shore A | Modulus at 10% elong. MPa | Tensile strength MPa | Tear strength KN/M | Elonga-tion % |
|---|---|---|---|---|---|
| 25°C | 60 | 0.60 | 2.10 | 12.2 | 35 |
| 232°C | — | — | — | — | — |
| 232°C* | 60 | 0.60 | 0.70 | 3.10 | 12 |

*Heat aged at 260°C for 500 hours in an air circulating oven.

Improvements in thermal conductivity and lower weight loss are found.

Example 54

Example 53 is repeated with the exception that 90.00 and 100 grams of SL-90 carbon black are used. The mixtures have shorter working times.

Example 55

Example 51 is repeated with the exception that 75.00 grams of N-339 carbon black is used. Moldable mixtures are obtained. Improvements are obtained in thermal properties.

Example 56

Example 51 is repeated with the exception that 75.00 grams of N-765 carbon black are used in preparing the mixture. Moldable materials are obtained.

Example 57

The base RTV silicone elastomer materials is prepared by mixing the following ingredients in a Hobart mixer:

| Component | Amount |
|---|---|
| 1. Silastic J RTV Silicone Elastomer and Silica Particulate (1) | 2494.30 |
| 2. Kadox 15 ZnO | 15.60 |
| 3. Williams 1011 Lampblack | 7.80 |
| 4. Glass Fibers ($\frac{1}{4}$ In. (6.3 mm) Chopped Strand Coated with Primer) | 27.50 |

After mixing the above ingredients for five minutes, this base material was stored for use in preparation of thermally conductive elastomers.

In compounding the thermally conductive silicone elastomers, the above base material is combined with the ingredients below in the following manner:

| Component | Amount |
|---|---|
| 1. Base Material | 400.00 grams |
| 2. Boron nitride (diameter: 48—90 μm) | 100.00 grams |
| 3. Silicone Fluid 200 (0.1 $m^2/s$ or 100,000 centistokes at 25°) | 40.00 grams |
| 4. Silastic J Crosslinking polymer | 40.00 grams |
| 5. Cure Modifier E—1990—76 (Example 1) | 0.80 grams |

The silastic J RTV silicone elastomer (base material) and boron nitride powder are charged in a Ross double planetary mixer. The addition of silicone fluid 200 follows with mixing for 4 minutes. The mix is scrapped off in middle of mixing chamber for better mixing. Then the silastic J curing agent and cure modifier are added to the mixture and mixing is completed in six more minutes. After de-aeration of mix for 30 minutes, it is ready for molding and determination of working time with the Brookfield Viscometer (Model LV). The working time of mixture is over in 15 hours.

Molding of mix is carried out by pouring and spreading the mixture in a four cavity, chrome-plated mold kept at ambient temperature. After curing the compound for 20 minutes (top platten of hydraulic press at 232°C and bottom at ambient temperature) under 70 ton (71120 kg) pressure, the rubber slabs are taken out of mold and post cured in an air circulating oven for 3 hours at 202°C. (Alternately, the mixture can be cured at room temperature for 24—48 hours).

The molded articles exhibited the following physical properties before and after aging* at 260°C for 500 hours.

| Test temp. | Hardness shore A | Modulus at 10% elong. MPa | Tensile strength MPa | Tear strength KN/M | Elonga-tion % |
|---|---|---|---|---|---|
| 25°C | 65 | 0.82 | 3.00 | 12.90 | 56 |
| 232°C | 65 | 0.93 | 1.77 | 6.20 | 26 |
| 232°C* | 70 | 1.01 | 1.44 | 3.90 | 16 |

There is good retention of physical properties on aging at 260°C for 500 hours. The weight loss on aging is small (4.4 vs 6.0) compared to silicone materials without boron nitride. The thermal conductivity of molded, rectangular shape is 0.40 w/m.°C ($9.53 \times 10^{-4}$ cal · $sec.^{-1}$ · $cm^{-1}$ · $°C^{-1}$). The addition of conductive filter to the elastomer compositions shows no negative effects and substantially increases the thermal conductivity of base elastomer material. Improvements in thermal expansion are also found.

(1) The silica particulate of the base material is about 1093 parts by weight ground silica (Min-U-Sil) and about 58 parts by weight fumed silica (Cab-O-Sil MS-75). Min-U-Sil is a white powder with particles having an average diameter of about 5 μm and a specific gravity of about 2.65. Cab-O-Sil MS-75 has a specific gravity of 2.2 and an average particle diameter between 0.07 and 0.1 μm. The base material further includes less than about 10 parts by weight of a platinum complex catalyst which is a vinyl siloxane oligomer modified by platinum metal (available from Dow Corning). The base material with these ingredients has a viscosity of 7—13 · $10^{-4}$ $m^2/s$ (700—1300 centistokes) at 25°C.

Example 58

The base material prepared as described in Example 57 is compounded with the following ingredients as in Example 57.

| Component | Amount |
|---|---|
| 1. Base Material | 400.00 grams |
| 2. Boron Nitride (Particle Diameter 48—90 μm) | 140.00 grams |
| 3. Silicone Fluid #200 (0.1 $m^2/s$ or 100,000 centistokes at 25°C) | 40.00 grams |
| 4. Silastic J Crosslinking polymer | 40.00 grams |
| 5. Cure Modifier E—1990—76 (Example 1) | 0.80 grams |

After mixing all ingredients in a Ross double planetary mixer as in Example 57 the compound has a working time of 11.0 hours.

Articles molded according to procedure of Example 57 exhibit good physical properties before and after aging at 260°C for 500 hours. Higher thermal conductivities and lower weight losses are also found.

Example 59

Example 57 is repeated with the exception that the weight of boron nitride is lowered (75.00 grams, 48—90 μm). After mixing all ingredients on a 80×180 mm two-roll vented research mill, the compound has a working time of over 20.0 hours.

Specimens molded under the same conditions as materials of Example 57 exhibit good physical properties. Lower weight loss on aging and improvements in thermal conductivity are found.

Example 60

The base RTV silicone material prepared as described in Example 57 is combined with the following ingredients according to mixing procedure and equipment of Example 57.

| Component | Amount |
|---|---|
| 1. Base Material (RTV Silicone Elastomer | 400.00 grams |
| 2. Boron nitride (Particle Diameter 25—30 μm) | 100.00 grams |
| 3. Silicone Fluid #200 (0.1 $m^2/s$ or 100,000 centistokes at 25°C) | 40.00 grams |
| 4. Silastic J Crosslinking polymer | 40.00 grams |
| 5. Cure Modifier E—1990—76 (Example 1) | 0.80 grams |

Upon completion of mixing, the mix has a working time of less than one hour.

Articles molded according to Example 57 exhibit the following properties before and after aging* at 260°C for 500 hours:

| Test temp. | Hardness shore A | Modulus at 10% elong. MPa | Tensile strength MPa | Tear strength KN/M | Elonga-tion % |
|---|---|---|---|---|---|
| 25°C | 68 | 1.24 | 3.09 | 12.50 | 46 |
| 232°C | 68 | 1.10 | 2.19 | 6.10 | 22 |
| 232°C* | 77 | 1.44 | 1.76 | 3.75 | 13 |

Molded specimens exhibit lower weight losses (4.9%) than materials without boron nitride. The thermal conductivity of these articles (0.58 w/m.°C) ($13.90 \cdot 10^{-4}$ cal · $sec.^{-1}$ · $cm^{-1}$ · $°C^{-1}$)) is over three times higher than values of material without the conductive filler. The expansion characteristics are also improved.

Example 61

Example 60 is repeated with the exception that lower amounts of boron nitride were used (80 grams, 25—30 μm boron nitride). After mixing according to procedure of Example 57. The mixture had a working time of less than 2.0 hours.

Molded specimens according to procedure of Example 57 had good physical properties before and after aging at 260°C for 500 hours. These materials showed improvements in thermal conductivity and lower weight loss on aging.

Example 62

The base silicone elastomer prepared as described in Example 57 is mixed with the following ingredients as in Example 57.

| Component | Amount |
|---|---|
| 1. Base Material | 500.00 grams |
| 2. Boron Nitride (Particle Diameter 25—30 μm) | 125.00 grams |
| 3. Silicone Fluid #200 (0.1 $m^2/s$ or 100,000 centistokes at 25°C) | 65.00 grams |
| 4. Silastic J Crosslinking polymer | 60.00 grams |
| 5. Cure Modifier E—1990—76 (Example 1) | 1.00 grams |

After mixing the ingredients, the mix had a working time of about 3 hours.

Molded specimens according to procedure of Example 57 exhibit good physical properties and improvements in thermal conductivity.

Example 63

Example 62 is repeated with the exception that a larger amount of silicone fluid #200 is used (90.0 grams silicone fluid #200). The mixture has longer working time and was moldable.

Example 64

The base material (RTV silicone base) described in Example 57 is mixed with the following ingredients according to procedure of Example 57.

| Component | Amount |
|---|---|
| 1. Base Material | 400.00 grams |
| 2. Boron Nitride (Particle Diameter 48—90 μm) | 50.00 grams |
| 3. Boron Nitride (Particle Diameter 25—30 μm) | 50.00 grams |
| 4. Silicone Fluid #200 (0.1 $m^2/s$ or 100,000 centistokes at 25°C) | 40.00 grams |
| 5. Silastic J Crosslinking polymer | 40.00 grams |
| 6. Cure Modifier E—1990—76 (Example 1) | 0.80 grams |

After mixing the above components, the mixture has a working time of over 4 hours.

Molded specimens according to procedure of Example 57 show improvements in thermal conductivity and have good physical properties.

Example 65

Example 64 is repeated with the exception that 70 gms. of boron nitride (particle diam. 48—90 μm) are used for preparing the mixture. The mix has a working time of over 3 hours. It shows good thermal conductivity.

Example 66

Example 57 is repeated with the exception that 180 gms. of boron nitride (particle diameter 48—90 μm) is used for preparation of mixture. The compound is moldable and exhibit good thermal conductivity.

Example 67

The base of Example 57 is combined with the following ingredients according to procedure of Example 57.

| Component | Amount |
|---|---|
| 1. Base Material | 400.00 grams |
| 2. Boron Nitride (25—30 μm) | 100.00 grams |
| 3. Silicone Fluid ($3 \cdot 10^{-2}$ $m^2/s$ or 30,000 centistokes at 25°C) | 40.00 grams |
| 4. Silastic J Crosslinking polymer | 40.00 grams |
| 5. Cure Modifier E—1990—76 (Example 1) | 0.80 grams |

After combining the ingredients, the mixture is moldable.

Example 68

Example 57 was repeated with the exception that another size grade (on 20 mesh-none, on 325 mesh—90%) of boron nitride is used for preparing the mixture. Upon mixing the compound is moldable and has good properties.

Example 69

Examples 57, 58 and 59 are repeated with the exception that 0.6 grams of cure modifier E—1990—76 of Example 1 used in compounding the ingredients. Similar results are seen.

Example 70

Examples 60, 61 and 62 are repeated with the exception that 1.6 grams of cure modifier E—1990—76 of Example 1 are used for preparing the mixture. Similar results are obtained.

Example 71

In Examples 57—61 Silastic J RTV silicone elastomer is replaced by Silastic L & E. Similar results are obtained.

Information on the Silicone Fluid #200 used in the above Examples may be obtained from Form No. 22—069C—76 of Dow Corning Corp. Information on Silicone Fluid #705 (Dow Corning 705 Diffusion Pump Fluid described as pentaphenylmethyltrisiloxane) used in the above Examples may be had from Bulletin 22—287 date 8/74 from Dow Corning Corp. Information on Silastic J RTV Silicone Elastomer (and curing agent) used in the above Examples may be obtained from Form No. 61—080A—76 of Dow Corning Corp. Information on Silastic E and L elastomers used in the above Examples may be obtained from Form No. 61—326—76 of Dow Corning Corp. These ingredients are all deemed within the scope of the invention as hereinbefore disclosed.

In the above Examples 1—71 the Silicone Fluid 200 and 705 (viscosity modifier) are silicone fluid number designations of fluids available from the Dow Corning Corporation. Silicone fluid designated by viscosity are also available from Dow Corning.

The Silastic J, E and L (i.e. crosslinking polymer) as well as Silastic Curing Agent (i.e. crosslinking oligomer) and Cure Modifier E—1990—76 are also available from the Dow Corning Corporation.

## Claims

1. A dispensable precursor composition comprising a crosslinkable organopolysiloxane, a silylhydride functional polysiloxane, and a filler, characterised in that the crosslinkable polysiloxane comprises

I. 100 parts by weight of a compound of the formula:

$$Ra—(\underset{\underset{R_b}{|}}{\overset{\overset{R_b}{|}}{Si}}O)_m—Si(Ra)_3 \qquad (I)$$

wherein at least some of the Ra's and Rb's are selected from (A) alkyl and aryl groups having up to 10 carbon atoms and (B) allyl or vinyl groups but wherein up to 25% of the Rb's may be

$$Rc—(\underset{|}{\overset{\overset{R_d}{|}}{Si}}O)_n—Si(Rc)_3 \qquad (II)$$

wherein at least some of the Rc's and Rd's are selected from (A) and (B) above but up to 10% of the Rd's may contain additional siloxane units with substituents selected from (A) and (B) or still additional siloxane units; and still further wherein (1) the average member of siloxane units per polymer molecule is from 100 to 300 and (2) there is an average total of from 1.5 to 6 crosslinking sites selected from the vinyl, allyl or vinyl and allyl groups per polymer molecule;

II. the filler comprises 60—500 parts by weight of a finely divided particulate comprising:

(A) silica particulate at a weight ratio to the polysiloxane of I. of from 0.3 to 2.5:1 wherein the silica particulate comprises:

1. ground silica having an average particle diameter of from 0.1 to 15 μm; and
2. fumed silica having an average particle diameter of from 0.005 to 0.015 μm;

(B) a thermally conductive powder in a weight ratio to the polysiloxane of I of from 0.3:1 to 2.5:1;

III. the composition further comprises a viscosity modifier comprising a silicone oil having a

viscosity of from $1 \times 10^{-3}$ to 1 $m^2/sec$ to (1000—1,000,000 centistokes) at 25°C in a weight ratio to the particulate of II of from 1:20 to 1:4 oil to particulate; and

IV. the silyl hydride functional polysiloxane is present in a weight ratio with respect to the polysiloxane of the formula (I) of from 1:3 to 1:20, and has an average of up to 20 silyl hydride groups per polymer chain.

2. A precursor composition in accordance with Claim 1 wherein the crosslinkable polysiloxane is substantially free of branching.

3. A precursor composition in accordance with Claim 1 or Claim 2 wherein the viscosity modifier comprises a dialkylpolysiloxane.

4. A precursor composition in accordance with Claim 3 wherein I (B) is vinyl.

5. A precursor composition in accordance with any one of Claims 1 to 4 wherein the conductive powder comprises silver, gold, silicon, aluminum, nickel, cadmium, palladium, molydenum, magnesium, chromium, zinc, rhodium, or tungsten powder.

6. A precursor composition in accordance with any one of claims 1 to 5 wherein the conductive powder comprises carbon powder.

7. A precursor composition in accordance with any one of claims 1 to 6 wherein the silicone oil comprises dimethyl silicone, methyl phenyl silicone, branched methyl silicone, branched chlorophenyl silicone, fluorosilicone, nitride silicone, methyl hydrogen or a methyl vinyl silicone oil or a mixture thereof.

8. A precursor composition in accordance with any one of claims 1 to 7 wherein the silyl hydride functional polysiloxane has a formula:

$$A\text{—}(\overset{\overset{\displaystyle R}{|}}{\underset{\underset{\displaystyle H}{|}}{Si}}O)_n\text{—}\overset{\overset{\displaystyle R}{|}}{\underset{\underset{\displaystyle R}{|}}{Si}}\text{—}A$$

wherein R and A comprise alkyl or alkoxy of 1—3 carbons, phenyl or phenoxy and n has an average value of from 5 to 15.

9. A precursor composition in accordance with any one of Claims 1 to 7 wherein the weight ratio of II. (A) to II. (B) is greater than 2:1.

10. An elastomer made from a precursor composition in accordance with any one of claims 1 to 9.

11. An elastomer in accordance with Claim 10, wherein the weight ratio of silica to the polysiloxane of I. is from 0.9:1 to 1:0.9.

**Patentansprüche**

1. Dosierbare Vorstufenzusammensetzung aus einem vernetzbaren Organopolysiloxan, einem silylhydridfunktionellen Polysiloxan und einem Füllstoff, dadurch gekennzeichnet, dass das vernetzbare Polysiloxan aus I. 100 Gewichtsteilen einer Verbindung der Formel

$$Ra\text{—}(\overset{\overset{\displaystyle R_b}{|}}{\underset{\underset{\displaystyle R_b}{|}}{Si}}O)_m\text{—}Si(Ra)_3 \qquad (I)$$

worin die Ra und Rb zumindest teilweise unter (A) Alkyl- und Arylgruppen mit bis zu 10 Kohlenstoff atomen und (B) Allyl- oder Vinylgruppen ausgewählt sind, wobei jedoch bis zu 25% der Rb

$$Rc\text{—}(\overset{\overset{\displaystyle R_d}{|}}{\underset{|}{Si}}O)_n\text{—}Si(Rc)_3 \qquad (II)$$

darstellen können, worin die Rc und Rd zumindest teilweise unter (A) und (B) wie oben ausgewählt sind, jedoch bis zu 10% der Rd zusätzliche Siloaneinheiten mit unter (A) und (B) ausgewählten Substituenten oder noch weitere Siloxaneinheiten enthalten können, und wobei ferner (1) die durchschnittliche Anzahl Siloxaneinheiten pro Polymermolekül 100 bis 300 beträgt und (2) im Durchschnitt insgesamt 1,5 bis 6 unter Vinyl-, Allyl- oder Vinyl- und Allylgruppen ausgewählte Vernetzungsstellen pro Polymermolekül vorliegen, besteht,

II. der Füllstoff aus 60 bis 500 Gewichtsteilen fein verteilter Teilchen besteht, welche

(A) Kieselsäureteilchen in einem Gewichtsverhältnis von 0,3 bis 2,5:1 zum Polysiloxan nach I., worin die Kieselsäureteilchen aus

1. gemahlener Kieselsäure mit einem mittleren Teilchendurchmesser von 0,1 bis 15 μm und
2. Kieselsäurerauch mit einem mittleren Teilchendurchmesser von 0,005 bis 0,015 μm bestehen, und

(B) im Gewichtsverhältnis von 0,3:1 bis 2,5:1 zum Polysiloxan nach I ein wärmeleitfähiges Pulver enthalten,

III. die Zusammensetzung ferner einen Viskositätsmodifikator aus einem Siliconöl mit einer Viskosität von $1.10^{-3}$ bis 1 $m^2$/Sek. (1 000—1 000 000 Centistoke) bei 25°C im Gewichtsverhältnis 1:20 bis 1:4 von Teilchen nach II zum Oel enthält und

IV. das silylhydridfunktionelle Polysiloxan bezüglich des Polysiloxans der Formel (I) im Gewichtsverhältnis 1:3 bis 1:20 vorliegt und im Durchschnitt bis zu 20 Silylhydridgruppen pro Polymerkette enthält.

2. Vorstufenzusammensetzung nach Anspruch 1, worin das vernetzbare Polysiloxan im wesentlichen verzweigungsfrei ist.

3. Vorstufenzusammensetzung nach Anspruch 1 oder 2, worin der Viskositätsmodifikator aus einem Dialkylpolysiloxan besteht.

4. Vorstufenzusammensetzung nach Anspruch 3, worin als I (B) Vinyl vorliegt.

5. Vorstufenzusammensetzung nach einem der Ansprüche 1 bis 4, worin das leitfähige Pulver aus Silber-, Gold-, Silicium-, Aluminium-, Nickel-, Cadmium-, Palladium-, Molybdän-, Magnesium-, Chrom-, Zink-, Rhodium- oder Wolframpulver besteht.

6. Vorstufenzusammensetzung nach einem der Ansprüche 1 bis 5, worin das leitfähige Pulver aus Kohlepulver besteht.

7. Vorstufenzusammensetzung nach einem der Ansprüche 1 bis 6, worin das Siliconöl aus Dimethylsilicon, Methylphenylsilicon, verzweigtem Methylsilicon, verzweigtem Chlorphenylsilicon, Fluorsilicon, Nitridsilicon, Methylwasserstoff- oder einem Methylvinylsiliconöl oder einem Gemisch von diesen besteht.

8. Vorstufenzusammensetzung nach einem der Ansprüche 1 bis 7, worin das silylhydridfunktionelle Polysiloxan der Formel

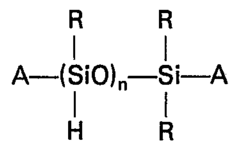

entspricht, worin R und A für Alkyl oder Alkoxy mit 1 bis 3 Kohlenstoffatomen, Phenyl oder Phenoxy stehen und n einen Durchschnittswert von 5 bis 15 besitzt.

9. Vorstufenzusammensetzung nach einem der Ansprüche 1 bis 7, worin das Gewichtsverhältnis von II. (A) zu II. (B) höher als 2:1 liegt.

10. Elastomer, hergestellt aus einer Vorstufenzusammensetzung nach einem der Ansprüche 1 bis 9.

11. Elastomer nach Anspruch 10, worin das Gewichtsverhältnis von Kieselsäure zum Polysiloxan nach I. 0,9:1 bis 1:0,9 beträgt.

## Revendications

1. Composition de précurseur dont on peut se dispenser, et comprenant un organopolysiloxane réticulable, un polysiloxane functionnel d'hydrure de silyle, ainsi qu'une charge, caractérisée en ce que le polysiloxane réticulable comprend:

I. 100 parties en poids d'un composé de formule:

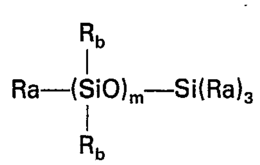 (I)

dans laquelle au moins certains des radicaux Ra et Rb sont choisis parmi (A) des groupes alkyle et des groupes aryle contenant jusqu'à 10 atomes de carbone et (B) des groupes allyle ou des groupes vinyle, mais dans laquelle jusqu'à 25% des radicaux Rb peuvent être des radicaux

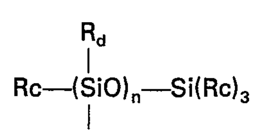 (II)

où au moins certains des radicaux Rc et Rd sont choisis parmi (A) et (B) ci-dessus, cependant que jusqu'à 10% des radicaux Rd peuvent contenir des motifs siloxane supplémentaires avec des substituants choisis parmi (A) et (B) ou encore des motifs siloxane supplémentaires, tandis que (1) le nombre moyen de motifs siloxane par molécule de polymère se situe entre 100 et 300 et (2) il y a un total moyen de 1,5 à 6 sièges de réticulation choisis parmi les groupes vinyle, allyle ou vinyle et allyle par molécule de polymère;

II. la charge comprend 60—500 parties en poids de particules finement divisées comprenant:

(A) des particules de silice dont le rapport pondéral avec le siloxane de I se situe entre 0,3 et 2,5:1, les particules de silice comprenant:

1. la silice broyée en particules d'un diamètre moyen de 0,1 à 15 $\mu$m et
2. la silice fumée en particules d'un diamètre moyen de 0,005 à 0,015 $\mu$m;

(B) une poudre thermiquement conductrice dont le rapport pondéral vis-à-vis du polysiloxane de I se situe entre 0,3:1 et 2,5:1;

III. la composition comprend également un modificateur de viscosité comportant une huile de silicone ayant une viscosité de $1 \times 10^{-3}$ à 1 $m^2$/seconde à (1.000—1.000.000 centistokes) à 25°C dans un rapport pondéral huile/particules de II de 1:20 à 1:4; et

IV. le polysiloxane fonctionnel d'hydrure de silyle est présent dans un rapport pondéral (vis-à-vis du polysiloxane de formule (I)) de 1:3 à 1:20, tandis qu'il contient, en moyenne, jusqu'à 20 groupes d'hydrure de silyle par chaîne de polymère.

2. Composition de précurseur suivant la revendication 1, caractérisée en ce que le polysiloxane réticulable est pratiquement exempt de ramification.

3. Composition de précurseur suivant la revendication 1 ou 2, caractérisée en ce que le modificateur de viscosité est un dialkylpolysiloxane.

4. Composition de précurseur suivant la revendication 3, caractérisée en ce que I (B) est un groupe vinyle.

5. Composition de précurseur suivant l'une quelconque des revendications 1 à 4, caractérisée en ce que la poudre conductrice est une poudre d'argent, d'or, de silicium, d'aluminium, de nickel, de cadmium, de palladium, de molybdène, de magnésium, de chrome, de zinc, de rhodium ou de tungstène.

6. Composition de précurseur suivant l'une quelconque des revendications 1 à 5, caractérisée en ce que la poudre conductrice est de la poudre de carbone.

7. Composition de précurseur suivant l'une quelconque des revendications 1 à 6, caractérisée en ce que l'huile de silicone est la diméthyl-silicone, la méthylphényl-silicone, la méthyl-silicone ramifiée, la chlorophényl-silicone ramifiée, la fluoro-silicone, la nitrure-silicone, le méthyl-hydrogène ou une huile de méthyl-vinyl-silicone ou encore un mélange de ces produits.

8. Composition de précurseur suivant l'une quelconque des revendications 1 à 7, caractérisée en ce que le polysiloxane fonctionnel d'hydrure de silyle répond à la formule:

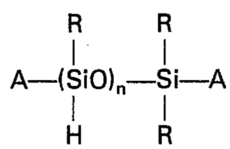

dans laquelle R et A représentent chacun un groupe alkyle ou un groupe alcoxy contenant 1 à 3 atomes de carbone, un groupe phényle ou un groupe phénoxy et n a une valeur moyenne de 5 à 15.

9. Composition de précurseur suivant l'une quelconque des revendications 1 à 7, caractérisée en ce que le rapport pondéral entre II. (A) et II. (B) est supérieur à 2:1.

10. Elastomère obtenu à partir d'une composition de précurseur suivant l'une quelconque des revendications 1 à 9.

11. Elastomère suivant la revendication 10, caractérisé en ce que le rapport pondéral entre la silice et le polysiloxane de I, se situe entre 0,9:1 et 1:0,9.